# EUROPEAN PATENT APPLICATION

(11) **EP 4 636 579 A1**
(43) Date of publication of application: **22.10.2025**
(21) Application number: 23902694.1
(22) Date of filing: 12.12.2023
(51) Int. Cl.: G06F 8/65

(54) **MODEL UPDATING METHOD AND APPARATUS, AND DEVICE AND STORAGE MEDIUM**

(30) Priority: 13.12.2022 CN 202211595738
(71) Applicant: Spreadtrum Communications (Shanghai) Co., Ltd., Shanghai 201203 (CN)
(72) Inventor: CHEN, Xiaoyu, Shanghai 201203 (CN)
(74) Representative: Vossius & Partner Patentanwälte Rechtsanwälte mbB
(86) International application number: PCT/CN2023/138107
(87) International publication number: WO 2024/125498

(57) **Abstract**

The present application provides a model update method and apparatus, a device, and a storage medium. The present application relates to the field of communication technologies, and the model update method includes: acquiring model information and/or model update information, and then updating a candidate model based on the model update information. The model information includes information of at least one model, the model update information includes update information corresponding to the at least one model, and the candidate model belongs to the at least one model. The present application provides a solution for model updating that can ensure model performance and enables the provision of normal services to users.

## Description

The present application claims priority to Chinese Patent Application No. 202211595738.8, entitled "MODEL UPDATE METHOD AND APPARATUS, DEVICE, AND STORAGE MEDIUM" and filed with the China National Intellectual Property Administration on December 13, 2022, which is hereby incorporated by reference in its entirety.

### TECHNICAL FIELD

The present application relates to the field of communication technologies, more particularly, to a model update method and apparatus, a device, and a storage medium.

### BACKGROUND

With the advancement of application demands and technologies, artificial intelligence (Artificial Intelligence, AI) and machine learning (Machine Learning, ML) have been gradually integrated into various fields. Deploying AI models/ML models on terminal devices can offer better system performance compared to traditional communication system solutions.

However, there is currently no solution for performing model updating when terminal devices use AI models/ML models.

### SUMMARY

The present application provides a model update method and apparatus, a device, and a storage medium, thereby providing a solution for how to perform model updating.

In a first aspect, the present application provides a model update method, comprising:
acquiring model information and/or model update information, where the model information includes information of at least one model, and the model update information includes update information corresponding to the at least one model;
updating a candidate model based on the model update information, where the candidate model belongs to the at least one model.

In a possible implementation, the model update information includes a model update method corresponding to the at least one model.

In a possible implementation, the updating the candidate model based on the model update information includes:
determining a target model based on the model update information;
updating the candidate model to the target model.

In a possible implementation, the model update information includes a first model list and/or first configuration information corresponding to the at least one model;
where the target model is determined based on the model update information and/or second model information corresponding to the candidate model; or,
the target model is determined based on a response message to a model update request;
where the second model information includes a second model list and/or second configuration information;
the first configuration information includes configuration information of each model in the first model list;
the second configuration information includes configuration information of each model in the second model list.

In a possible implementation, the target model meets a first condition and a second condition; where the first condition is that a model identifier of the target model is present in both the first model list and the second model list, and the second condition is that a monitoring result of the candidate model matches configuration information corresponding to the target model in the first configuration information, or a monitoring result of the candidate model matches configuration information corresponding to the target model in the second configuration information.

In a possible implementation, the target model is a model with a highest priority among models that meet the first condition and the second condition.

In a possible implementation, a first model is absent from both the first model list and the second model list, and the target model is carried in the response message to the model update request;
the first model is a model that meets both a third condition and a fourth condition;
the third condition is that a model identifier of the first model is present in both the first model list and the second model list, and the fourth condition is that a monitoring result of the candidate model matches configuration information of the first model in the first configuration information, or a monitoring result of the candidate model matches configuration information of the first model in the second configuration information.

In a possible implementation, the target model is carried in the response message to the model update request, and the method further includes:
transmitting the model update request;
receiving the response message to the model update request.

In a possible implementation, the target model is determined based on indication information in the response message to the model update request; and
the indication information is used to indicate one or more items of following information:
the target model;
the target model being any model in the second model list;
the target model being a model with a highest priority in the second model list.

In a possible implementation, the model update request includes the second model list and/or the second configuration information.

In a possible implementation, the information of the model includes one or more items of following:
information used to indicate a model;
information used to indicate a use case;
information used to indicate a function.

In a possible implementation, the method further includes:
acquiring a first duration, where the first duration is a minimum duration required between execution of a model update and execution of a successive model update.

In a second aspect, the present application provides a model update method, including:
receiving model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model; the first configuration information includes configuration information of each model in the first model list; and the model update information is used to determine a target model of the candidate model.

In a possible implementation, the target model of the candidate model is carried in a response message to a model update request, and the method further includes:
transmitting the model update request;
receiving the response message to the model update request.

In a possible implementation, the target model is determined based on indication information in the response message to the model update request;
the indication information is used to indicate one or more items of following information:
the target model;
the target model being any model in the second model list;
the target model being a model with a highest priority in the second model list.

In a possible implementation, the information of the model includes one or more items of following:
information used to indicate a model;
information used to indicate a use case;
information used to indicate a function.

In a possible implementation, the method further includes:
acquiring a first duration, where the first duration is a minimum duration required between execution of a model update and execution of a successive model update.

In a third aspect, the present application provides a model update method, including:
transmitting model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model; the first configuration information includes configuration information of each model in the first model list; and the model update information is used to determine a target model of the candidate model.

In a possible implementation, the method further includes:
receiving a model update request;
transmitting a response message to the model update request, where the response message to the model update request carries a target model of the candidate model.

In a possible implementation, the response message to the model update request includes indication information;
the indication information is used to indicate one or more items of following information:
the target model;
the target model being any model in a second model list;
the target model being a model with a highest priority in the second model list.

In a possible implementation, the information of the model includes one or more items of following:
information used to indicate a model;
information used to indicate a use case;
information used to indicate a function.

In a possible implementation, the method further includes:
transmitting a first duration, where the first duration is a minimum duration required between execution of a model update and execution of a successive model update.

In a fourth aspect, the present application provides a model update apparatus, including:
an acquiring module, configured to acquire model information and/or model update information, where the model information includes information of at least one model, and the model update information includes update information corresponding to the at least one model;
an updating module, configured to update a candidate model based on the model update information, where the candidate model belongs to the at least one model.

In a possible implementation, the model update information includes a model update method corresponding to the at least one model.

In a possible implementation, the updating module is specifically configured to:
determine a target model based on the model update information;
update the candidate model to the target model.

In a possible implementation, the model update information includes a first model list and/or first configuration information corresponding to the at least one model;
where the target model is determined based on the model update information and/or second model information corresponding to the candidate model; or,
the target model is determined based on a response message to a model update request;
where the second model information includes a second model list and/or second configuration information;
the first configuration information includes configuration information of each model in the first model list;
the second configuration information includes configuration information of each model in the second model list.

In a possible implementation, the target model meets a first condition and a second condition; where the first condition is that a model identifier of the target model is present in both the first model list and the second model list, and the second condition is that a monitoring result of the candidate model matches configuration information corresponding to the target model in the first configuration information, or a monitoring result of the candidate model matches configuration information corresponding to the target model in the second configuration information.

In a possible implementation, the target model is a model with a highest priority among models that meet the first condition and the second condition.

In a possible implementation, a first model is absent from both the first model list and the second model list, and the target model is carried in the response message to the model update request;
the first model is a model that meets both a third condition and a fourth condition;
the third condition is that a model identifier of the first model is present in both the first model list and the second model list, and the fourth condition is that a monitoring result of the candidate model matches configuration information of the first model in the first configuration information, or a monitoring result of the candidate model matches configuration information of the first model in the second configuration information.

In a possible implementation, the target model is carried in the response message to the model update request, and the apparatus further includes a transceiving module;
where the transceiving module is specifically configured to:
transmit the model update request;
receive the response message to the model update request.

In a possible implementation, the target model is determined based on indication information in the response message to the model update request;
where the indication information is used to indicate one or more items of following information:
the target model;
the target model being any model in the second model list;
the target model being a model with a highest priority in the second model list.

In a possible implementation, the model update request includes the second model list and/or the second configuration information.

In a possible implementation, the information of the model includes one or more items of following:
information used to indicate a model;
information used to indicate a use case;
information used to indicate a function.

In a possible implementation, the acquiring module is specifically configured to:
acquire a first duration, where the first duration is a minimum duration required between execution of a model update and execution of a successive model update.

In a fifth aspect, the present application provides a model update apparatus, including:
a receiving module, configured to receive model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model; the first configuration information includes configuration information of each model in the first model list; and the model update information is used to determine a target model of the candidate model.

In a possible implementation, the target model of the candidate model is carried in a response message to a model update request, and the apparatus further includes a transceiving module;
where the transceiving module is specifically configured to:
transmit the model update request;
receive the response message to the model update request.

In a possible implementation, the target model is determined based on indication information in the response message to the model update request;
where the indication information is used to indicate one or more items of following information:
the target model;
the target model being any model in the second model list;
the target model being a model with a highest priority in the second model list.

In a possible implementation, the information of the model includes one or more items of following:
information used to indicate a model;
information used to indicate a use case;
information used to indicate a function.

In a possible implementation, the apparatus further includes an acquiring module; and
where the acquiring module is specifically configured to:
acquire a first duration, where the first duration is a minimum duration required between execution of a model update and execution of a successive model update.

In a sixth aspect, the present application provides a model update apparatus, including:
a transmitting module, configured to transmit model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model; the first configuration information includes configuration information of each model in the first model list; and the model update information is used to determine a target model of the candidate model.

In a possible implementation, the apparatus further includes a transceiving module;
where the transceiving module is specifically configured to:
receive a model update request;
transmit a response message to the model update request, where the response message to the model update request carries a target model of the candidate model.

In a possible implementation, the response message to the model update request includes indication information;
where the indication information is used to indicate one or more items of following information:
the target model;
the target model being any model in a second model list;
the target model being a model with a highest priority in the second model list.

In a possible implementation, the information of the model includes one or more items of following:
information used to indicate a model;
information used to indicate a use case;
information used to indicate a function.

In a possible implementation, the transmitting module is specifically configured to:
transmit a first duration, where the first duration is a minimum duration required between execution of a model update and execution of a successive model update.

In a seventh aspect, the present application provides an electronic device, including: a processor, and a memory communicatively connected to the processor; where
the memory stores computer-executable instructions; and
the processor executes the computer-executable instructions stored in the memory to implement the model update method as described in the first aspect or the second aspect.

In an eighth aspect, the present application provides an electronic device, including: a processor, and a memory communicatively connected to the processor; where
the memory stores computer-executable instructions;
the processor executes the computer-executable instructions stored in the memory to implement the model update method as described in the third aspect.

In a ninth aspect, the present application provides a computer-readable storage medium. The computer-readable storage medium stores computer-executable instructions which, when run by a computer, cause the model update method as described in any one of the first aspect to the third aspect to be performed.

In a tenth aspect, the present application provides a computer program product, including a computer program which, when run by a computer, causes the model update method described in any one of the first aspect to the third aspect to be performed.

In an eleventh aspect, an embodiment of the present application provides a chip, storing thereon a computer program which, when executed by the chip, causes the model update method described in any one of the first aspect to the third aspect to be performed.

In a possible implementation, the chip is in a chip module.

In a twelfth aspect, the present application provides a module device, including a power module, a storage module, and a chip module; where
the power module is configured to supply power to the module device;
the storage module is configured to store data and instructions; and
the chip module is configured to execute the model update method described in any one of the first aspect to the third aspect.

According to the model update method and apparatus, the device, and the storage medium provided by the present application, the terminal device may acquire the model information and/or the model update information, and then update the candidate model based on the model update information. The model information includes the information of at least one model, the model update information includes the update information corresponding to the at least one model, and the candidate model belongs to the at least one model. The present application provides a solution for how to perform model updating.

### BRIEF DESCRIPTION OF DRAWINGS

FIG. 1 is a schematic diagram of an application scenario applicable to the present application.
FIG. 2 is a schematic flowchart of a model update method provided in Embodiment 1 of the present application.
FIG. 3 is a schematic flowchart of another model update method provided in Embodiment 2 of the present application.
FIG. 4 is a schematic flowchart of another model update method provided in Embodiment 3 of the present application.
FIG. 5 is a schematic structural diagram of a model update apparatus provided in Embodiment 4 of the present application.
FIG. 6 is a schematic structural diagram of a model update apparatus provided in Embodiment 5 of the present application.
FIG. 7 is a schematic structural diagram of a model update apparatus provided in Embodiment 6 of the present application.
FIG. 8 is a schematic structural diagram of an electronic device provided in Embodiment 7 of the present application.

### DESCRIPTION OF EMBODIMENTS

The technical solution of embodiments of the present application may be applicable to various communication systems, such as: long term evolution (Long Term Evolution, LTE) systems, LTE frequency division duplex (Frequency Division Duplex, FDD) systems, LTE time division duplex (Time Division Duplex, TDD), universal mobile telecommunication systems (Universal Mobile Telecommunication Systems, UMTSs), worldwide interoperability for microwave access (Worldwide Interoperability for Microwave Access, WiMAX) communication systems, 5th-generation (5th-generation, 5G) mobile communication systems or a new radio access technology (New Radio Access Technology, NR). The 5G mobile communication systems may include Non-Standalone (Non-Standalone, NSA) 5G mobile communication systems and/or Standalone (Standalone, SA) 5G mobile communication systems.

The technical solution in the embodiments of the present application can also be applied to future communication systems, such as sixth-generation mobile communication systems, seventh-generation mobile communication systems, etc., which is not limited in the present application.

The technical solution in the present application may also be applicable to machine type communication (Machine Type Communication, MTC) or long term evolution-machine (Long Term Evolution-Machine, LTE-M) technologies, device-to-device (Device to Device, D2D) networks, machine to machine (Machine to Machine, M2M) networks, Internet of Things (Internet of Things, IoT) networks or other networks. The IoT network may include, for example, the Internet of Vehicles. The communication methods in Internet of Vehicles systems are collectively referred to as Vehicle-to-X (Vehicle to X, V2X, X can represent everything). For example, the V2X may include: vehicle to vehicle (Vehicle to Vehicle, V2V) communications, vehicle to infrastructure (Vehicle to Infrastructure, V2I) communications, vehicle to pedestrian (Vehicle to Pedestrian, V2P) communications, or vehicle to network (Vehicle to Network, V2N) communications, etc.

For models deployed on terminal devices (e.g., AI models/ML models, or other models), in order to ensure the performance of the terminal devices, the terminal devices need to utilize appropriate models. Therefore, model updates can be performed to ensure the use of suitable models on the terminal devices.

The present application provides a model update method, whereby a terminal device may acquire model information and/or model update information, so that the terminal device can update a candidate model based on the model update information. The present application provides a solution for how to perform model updating.

It should be noted that in the embodiments of the present application, the term "model update" refers to model updates in a broad sense, and the model updates involved in the present application includes, but are not limited to: model switching (Model Switching), model update (Model Update), model selection (Model Selection), fallback operation (Fallback Operation), model activation (Model Activation), model deactivation (Model Deactivation), etc.

The model update (Model Update) includes adjustments to the model architecture and model parameter(s) (weight(s), bias parameter(s), etc.). The model architecture includes, but is not limited to: convolutional neural network (Convolutional Neural Network, CNN), deep neural networks (Deep Neural Networks, DNN), Transformer, long short-term memory (Long Short-Term Memory, LSTM), etc.

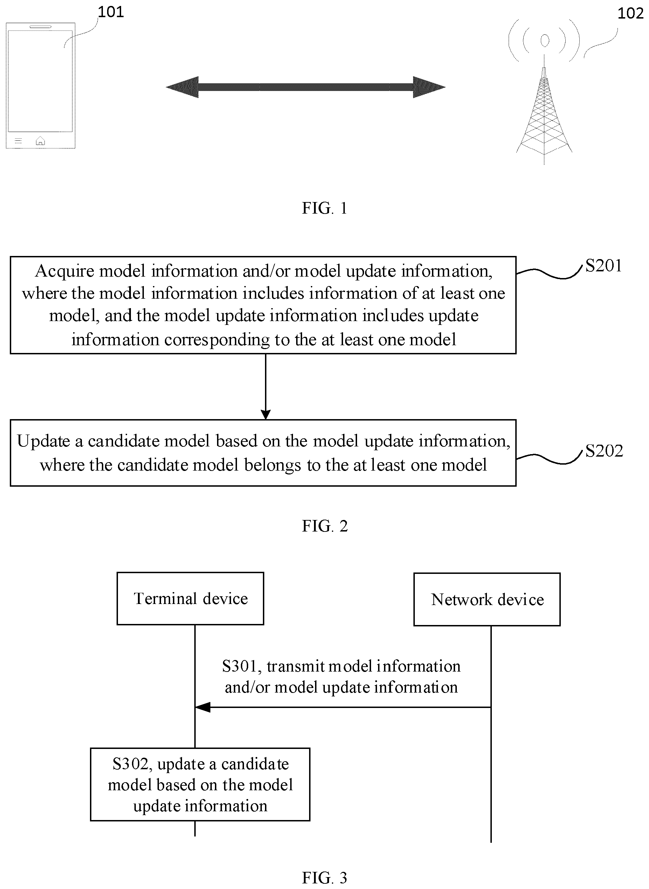

For ease of understanding, an application scenario to which the embodiments of the present application are applicable is described below in conjunction with the example of FIG. 1.

Illustratively, FIG. 1 is a schematic diagram of an application scenario applicable to which the present application. Please refer to FIG. 1, which includes a terminal device 101 and a network device 102. The network device 102 may transmit model information and/or model update information, and the terminal device 101 may receive the model information and/or the model update information. The model information includes information of at least one model, and the model update information includes update information corresponding to the at least one model. The terminal device 101 may update a candidate model in the model information based on the model update information.

It can be understood that there may be multiple terminal devices 101 and network devices 102, which are not shown in the figure.

In the embodiments of the present application, the network device may be any device with a wireless transceiving function. The device includes, but is not limited to: an evolved node B (Evolved Node B, eNB), a radio network controller (Radio Network Controller, RNC), a node B (Node B, NB), base station controller (Base Station Controller, BSC), a base transceiver station (Base Transceiver Station, BTS), a home base station (e.g., Home Evolved NodeB, or Home Node B, HNB), a baseband unit (Baseband Unit, BBU), an access point (Access Point, AP) in a wireless fidelity (Wireless Fidelity, WiFi) system, a wireless relay node, a wireless backhaul node, a transmission point (Transmission Point, TP) or a transmission and reception point (Transmission and Reception Point, TRP), etc., it may also be the next generation node B (gNB) or a transmission point (TRP or TP) in 5G system (e.g., NR system), one or a group of antenna panels (including multiple antenna panels) of a base station in a 5G system, or it may also be a network node constituting a gNB or a transmission point, such as a baseband unit (BBU) or a distributed unit (Distributed Unit, DU), etc.

In some deployments, the gNB may include a centralized unit (Centralized Unit, CU) and a DU. The gNB may also include an active antenna unit (Active Antenna Unit, AAU). The CU implements part of functions of the gNB, and the DU implements part of functions of the gNB. For example, CU is responsible for processing non-real-time protocols and services, implementing the functions of the radio resource control (Radio Resource Control, RRC) and PDCP layers. DU is responsible for processing physical layer protocols and real-time services, implementing the functions of the radio link control (Radio Link Control, RLC) layer, the medium access control (Medium Access Control, MAC) layer, and the physical layer (Physical, PHY). AAU implements part of processing functions of the physical layer, functions related to radio frequency processing and active antennas. Since information of the RRC layer ultimately transforms into information of the PHY layer or is converted from information of the PHY layer, under this architecture, high-level signaling (e.g., RRC layer signaling) may also be considered as being transmitted either by DU, or by DU+AAU. It can be understood that the network device may be a device including one or more of a CU node, a DU node, and an AAU node. In addition, the CU may be considered as a network device in the radio access network (Radio Access network, RAN) or the core network (Core Network, CN), which is not limited in the present application.

The network device provides services for a cell, and the terminal device communicates with the cell through transmission resources (e.g., frequency domain resources or spectrum resources) allocated by the network device. The cell may belong to a macro base station (e.g., macro eNB or macro gNB, etc.) or to a base station corresponding to a small cell (Small Cell). The small cell here may include: a metro cell (Metro Cell), a micro cell (Micro Cell), a pico cell (Pico Cell), a femto cell (Femto Cell), etc. These small cells have the characteristics of small coverage and low transmission power, suitable for providing high-speed data transmission services.

In the embodiments of the present application, the terminal device may also be referred to as user equipment (User Equipment, UE), access terminal, user unit, user station, mobile station, mobile terminal, remote station, remote terminal, mobile device, user terminal, terminal, wireless communication device, user agent or user device.

The terminal device may be a device that provides voice/data connectivity to users, such as a handheld device or vehicle-mounted device with wireless connection capabilities. At present, some examples of terminals may be: mobile phones (Mobile Phones), pads (Pads), computers (e.g., laptops, PDAs, etc.) with wireless transceiving capabilities, mobile Internet devices (Mobile Internet Devices, MIDs), virtual reality (Virtual Reality, VR) devices, augmented reality (Augmented Reality, AR) devices, extended reality (Extended Reality, XR) devices, wireless terminals in industrial control (industrial control), wireless terminals in self-driving, wireless terminals in remote medical (Remote Medical), wireless terminals in smart grid (Smart Grid), wireless terminals in transportation safety (Transportation Safety), wireless terminals in smart city (Smart City), wireless terminals in smart home (Smart Home), cellular phones, cordless phones, session initiation protocol (Session Initiation Protocol, SIP) phones, wireless local loop (Wireless Local Loop, WLL) stations, personal digital assistants (Personal Digital Assistants, PDAs), handheld devices with wireless communication capabilities, computing devices or other processing devices connected to wireless modems, vehicle-mounted devices, wearable devices, terminal devices in 5G networks or terminal devices in future evolved public land mobile communication networks (Public Land Mobile Networks, PLMNs), etc.

The wearable devices, also referred to as wearable smart devices, are a category of devices that are developed by incorporating wearable technologies into the intelligent design of everyday wearables, such as glasses, gloves, watches, clothing and shoes. The wearable devices are portable devices that are worn directly on the body or integrated into users' clothing or accessories. Wearable devices are not merely hardware devices, but rather achieve advanced functions through software support, data interaction, and cloud interaction. The wearable smart devices in a broad sense include those that are fully functional, large in size, and can operate independently of smartphones to achieve complete or partial functions, such as smart watches or smart glasses, as well as those that focus simply on a certain type of application function and need to be used in conjunction with other devices such as smartphones, e.g., various smart bracelets and smart jewelry for vital sign monitoring.

In addition, the terminal device may also be a terminal device in an IoT system. The Internet of Things (IoT) constitutes a critical component of future information technology development. Its primary technical characteristic involves connecting items to networks through communication technologies, thereby establishing intelligent networks with human-machine interconnections and thing-thing interconnections. IoT technology can achieve massive connections, deep coverage and power saving through narrowband (Narrow Band, NB) technologies, for example.

Illustratively, the technical solution of the present application and how the technical solution of the present application solves the technical problem mentioned above are described in detail below with specific embodiments. The following specific embodiments may exist independently or be combined with each other. For the same or similar concepts or processes, certain embodiments may omit redundant descriptions. The embodiments of the present application will be described below in conjunction with the drawings.

FIG. 2 is a schematic flowchart of a model update method provided in Embodiment 1 of the present application. The method may be executed by a terminal device or by a model update apparatus provided in a terminal device. The apparatus may be a chip, a chip module, or an integrated development environment (integrated development environment, IDE). Referring to FIG. 2, the method includes steps as follows.

S201, acquire model information and/or model update information, where the model information includes information of at least one model (hereinafter referred to as N model(s) for descriptive convenience, where N is an integer greater than 0), and the model update information includes update information corresponding to the at least one model.

Optionally, the terminal device may acquire the model information and/or the model update method through any one of the following Method 1 to Method 3.

### Method 1

In Method 1, the terminal device may acquire the model information and the model update information locally. In this case, the model information and the model update information may be preset, e.g., specified in protocol(s).

### Method 2

In Method 2, the terminal device may acquire the model information and the model update information from further device(s). For example, as described in S301 in the embodiment shown in FIG. 3, the terminal device may receive the model information and the model update information transmitted by a network device.

### Method 3

The terminal device may acquire the model information locally and acquire the model update information from further device(s), or the terminal device may acquire the model update information locally and acquire the model information from further device(s).

In Method 1 to Method 3 mentioned above, when the terminal device acquires the model information locally, the model information may be pre-configured for the terminal device.

Optionally, the information of the model(s) included in the model information may include one or more of the following items:
(1) Information used to indicate model(s)
(2) Information used to indicate use case(s)
(3) Information used to indicate function(s)

The following is a detailed description of various information that may be included in the model information.

### (1) Information used to indicate model(s)

The information used to indicate model(s) may include at least one model identifier. A single model identifier is used to directly indicate one model. It can be understood that when a certain model (e.g., Model 1) is present in multiple use cases, the model identifier may correspond to Model 1 in multiple use cases.

### (2) Information used to indicate use case(s)

The information used to indicate use case(s) may include at least one use case identifier. A single use case identifier is used to indicate one use case and also to indicate all models associated with the use case. Optionally, the terminal device and the network device may negotiate model(s) corresponding to a use case, and the terminal device may determine, based on the use case identifier, the model(s) corresponding to the use case identifier.

### (3) Information used to indicate function(s)

The information used to indicate function(s) may include at least one function identifier. A single function identifier is used to indicate one function and also to indicate all models associated with this function. Optionally, the terminal device and the network device may negotiate model(s) corresponding to a function, and the terminal device may determine the model(s) corresponding to the function identifier based on the function identifier.

The information (1) to (3) mentioned above is intended for indicating one or more models. In a practical implementation, the information contained in the information of the model(s) may illustratively be any one of the following.

First type: the information of the model(s) may include information (1) and information (2). A combination of information (1) and information (2) may be used to indicate the model identifier(s) of one or more models under the use case. That is, in this implementation, a combination of the at least one use case identifier and the at least one model identifier may indicate one or more models under at least one use case.

Second type: the information of the model(s) may include information (1) and information (3). A combination of information (1) and information (3) may be used to indicate the model identification(s) of one or more models under the function. That is, in this implementation, a combination of the at least one function identifier and the at least one model identifier may indicate one or more models under at least one function.

Optionally, the model update information may have two following cases.

Case 1: the model update information includes model update method(s) corresponding to N model(s).

Case 2: the model update information includes information for determining a target model. The target model is a target model for a candidate model, meaning that the candidate model becomes the target model after being updated. For example, the information for determining the target model in the model update information may include: a first model list and/or first configuration information corresponding to N model(s).

In Case 2, each of the N models may correspond to a model update method, such as the example shown in Table 1. Alternatively, the N models may correspond to the same model update method. In this case, the N models may belong to the same use case or function, or may belong to different use cases or functions respectively, which is not limited herein.

Alternatively, in Case 1, part of the N models may correspond to one model update method, while other models of the N models may correspond to one model update method respectively, as shown in Table 2.

**Table 1**

| Model identifier | Model update method |
|---|---|
| 0001 | UE.1 |
| 0002 | NW.1 |
| 0003 | UE.2 |
| 0004 | NW.2 |

**Table 2**

| Model identifier | Model update method |
|---|---|
| 0001 | UE.1 |
| 0002 | |
| 0003 | UE.2 |
| 0004 | NW.2 |

Optionally, the model update method may include but is not limited to one or more of the following items:
(1) The terminal device monitors the model(s), independently completes the model update, and does not notify the network device of status of the model update;
(2) The terminal device monitors the model(s), independently completes the model update, and notifies the network device of the status of the model update;
(3) The terminal device monitors the model(s) and transmits monitoring result(s) to the network device, to enable the network device to assist the terminal device in completing the model update;
(4) The network device monitors the model(s) deployed on the terminal device, and instructs the terminal device to complete the model update.

In the examples in Table 1 and Table 2, UE.1 may correspond to the aforementioned update method (1), UE.2 may correspond to the aforementioned update method (2), NW.1 may correspond to the aforementioned update method (3), and NW.2 may correspond to the aforementioned update method (4). It should be noted that the model identifiers and the model update methods in Table 1 and Table 2 are merely exemplary, and the model identifiers and the model update methods may also be represented in other ways.

In Case 2, each of the N models may correspond to a first model list and/or first configuration information (e.g., as shown in Table 3). In this example, different models correspond to different first model lists, and the configuration information corresponding to the models in each of the first model lists is different. Different models in the first model list may also correspond to the same configuration information.

**Table 3**

| Model identifiers of models of N models | First model lists corresponding to models of N models | Configuration information corresponding to models of N models |
|---|---|---|
| 0001 | 0005 | Configuration information 5 |
| | 0006 | Configuration information 6 |
| | 0007 | Configuration information 7 |
| 0002 | 0004 | Configuration information 4 |
| | 0005 | Configuration information 5 |
| | 0006 | Configuration information 6 |
| | 0007 | Configuration information 7 |
| 0003 | 0010 | Configuration information 10 |
| | 0011 | Configuration information 11 |

In another example, N models may correspond to the same first model list, and the configuration information corresponding to the models in the first model list is different. For example, the models 0001, 0002, 0003, and 0004 under a channel state information feedback (Channel State Information Feedback, CSI Feedback) use case (e.g., its use case identifier is U1), all correspond to the same first model list, as shown in Table 4:

**Table 4**

| Use case identifier | First model list corresponding to models in use case | First configuration information corresponding to models in use case |
|---|---|---|
| U1 | 0005 | Configuration information 5 |
| | 0006 | Configuration information 6 |
| | 0007 | Configuration information 7 |
| | 0008 | Configuration information 8 |

Alternatively, each model in the first model list may correspond to the same configuration information. That is, a plurality of models under one use case correspond to one piece of first configuration information.

Alternatively, a part of models in the first model list may correspond to the same configuration information, and other models may correspond to different configuration information respectively, as shown in Table 5.

**Table 5**

| Use case identifier | First model list corresponding to models in use case | First configuration information corresponding to models in use |
|---|---|---|
| | | case |
| U1 | 0005 | Configuration information 5 |
| | 0006 | |
| | 0007 | Configuration information 7 |
| | 0008 | Configuration information 8 |

It can be understood that the formats of Tables 1 to 3 above are merely for conveniently presenting the model update information, and the present application does not limit the format of the first model list and/or the first configuration information corresponding to the N model(s) included in the model update information.

Optionally, the configuration information corresponding to the model in the first model list may include one or more of the following items:
(1) Configuration parameter(s) applicable to the model
(2) Model performance indicator(s).

The following is a detailed description of each information that may be included in the configuration information.

### (1) Configuration parameter(s) applicable to the model

Optionally, the configuration parameter(s) applicable to the model may include one or more of the following items: application scenario(s) of the model, valid region(s) of the model, and processing parameter(s) of the model.

The application scenario(s) of the model may include one or more of the following:
urban (urban), non-urban (e.g., rural), high-speed movement, medium-speed movement, low-speed movement, uniform-speed movement, stationary, a base station height, a terminal device height, a preset inter-site distance (Inter-Site Distance, ISD), a movement speed of a terminal device, terminal device distribution, etc.

The application scenario of the model refers to a scenario to which a model is applicable. In a case where the application scenario of a model includes urban, it means that the model is applicable to urban scenarios. In a case where the application scenario of a model includes non-urban, it means that the model is applicable to non-urban scenarios. In a case where the application scenario of a model includes other types, reference can be made for understanding, which will not be repeated.

High-speed movement, low-speed movement, uniform-speed movement, and stationary refer to movement status of a terminal device. The movement status of the terminal device may be determined as follows: the movement status of the terminal device is determined to be high-speed movement when the movement speed of the terminal device is greater than a first threshold; the movement status of the terminal device is determined to be medium-speed movement when the movement speed of the terminal device is lower than or equal to the first threshold and greater than or equal to a second threshold; the movement status of the terminal device is determined to be low-speed movement when the movement speed of the terminal device is lower than the second threshold; the movement status of the terminal device is determined to be uniform-speed movement when a constant speed is maintained or the movement speed of the terminal device is within the same speed range; the movement status of the terminal device is determined to be stationary when the movement speed of the terminal device is 0 km/h (kilometer/hour). It can be understood that the definitions of high-speed movement, medium-speed movement, and low-speed movement here are provided for illustrative purposes only, and the present application imposes no limitations thereon. The first threshold and/or the second threshold may be preset (e.g., specified by a protocol), indicated by a network device, or determined by negotiation between the terminal device and the network device, which is not limited in the present application.

The base station height may be a specific value or a height range. The terminal device height may be a specific value or a height range. The preset inter-station distance may be considered as a distance between base stations. For example, the preset inter-station distance may be 200 m (meters) or 500 m, etc. The movement speed of the terminal device may be a specific value (for example, 3 km/h (kilometer/hour), 30 km/h, 60 km/h) or a speed range.

The terminal device distribution may refer to the quantity of terminal devices within a certain range, or a density distribution characteristic of terminal devices within a certain range (e.g., dense-center/sparse-edge distribution, uniform distribution, etc.), or may be characterized by outdoor terminal device distribution and indoor terminal device distribution. For example, the composition ratio between the outdoor terminal device distribution and the indoor terminal device distribution may be 100% outdoor/0% indoor, or 20% outdoor/80% indoor, etc.

Optionally, the valid region of the model may include one or more of the following items:
frequency, registration area (Registration Area, RA), tracking area (Tracking Area, TA), cell, beam, etc.

The valid region of a model indicates a region in which the model is valid. That is, a model is valid only within the valid region of the model, otherwise it is invalid.

When the valid region of a model is frequency, the valid region of the model may refer to cell(s) corresponding to that frequency. When the valid region of a model is beam, the valid region of the model may refer to a range covered by that beam.

Illustratively, the cell may include urban macro cell(s) Uma, suburban macro cell(s) Sma, urban micro cell(s) Umi, etc.

Illustratively, the beam may include: an RX beam and a DL TX beam of a terminal device. UE RX beam may specifically include: the number of UE Rx beams (including panel quantity and antenna array dimensions of the terminal device), etc.

Illustratively, the DL TX beam may specifically include: a DL Tx beam codebook (including various beam (pair) sets A and antenna array dimensions of a gNB).

Optionally, the processing parameter of the model may include one or more of the following items:
method(s) for processing input data of a model (quantization methods, normalization methods, dequantization methods, denormalization methods, etc.), method(s) for processing output data of a model (quantization methods, normalization methods, dequantization methods, denormalization methods, etc.), data precision (e.g., float point (Float point) 64/32/16 or integer Int 16/8/4, etc.), model complexity (e.g., floating point of operations (FLoating point of Operations, FLOPs), parameter magnitude, model volume, required power consumption, required computing power, etc.), other configurations (e.g., antenna ports, bandwidth (i.e., Bandwidth), other configurations on the terminal device side, etc.), model architecture (convolutional neural networks (Convolutional Neural Networks, CNN), deep neural networks (Deep Neural Networks, DNN), Transformer Transformer, etc.).

The model input data processing method(s) and the model output data processing method(s) may be fixed or flexibly configured, which is not limited in the present application.

### (2) Model performance indicator(s)

Optionally, the model performance indicator(s) may include intermediate indicator(s) and/or system performance indicator(s), etc.

The intermediate indicator may include one or more of the following items:
(3) Model accuracy
(4) Change in model accuracy
(5) Cosine similarity
(6) Change in cosine similarity
(7) Measurement result(s) of model input and/or model output
(8) Output gain
(9) Change in output gain
(10) Reference signal overhead reduction (Reference Signal Overhead Reduction)

The following is a detailed description of each type of information that may be included as part of the intermediate indicator.

### (3) Model accuracy

Model accuracy is used to characterize the accuracy level of the model. The model accuracy may be an immediate value/instantaneous value or an average value.

The model accuracy may be a model accuracy at a specific moment, or a model accuracy over a certain time length or time window.

The model accuracy may be an average value, maximum value, or minimum value among model accuracies determined over multiple times. Alternatively, the model accuracy may be an accuracy determined based on a performance threshold (e.g., the ratio between the number of detections where the performance threshold is exceeded and the total number of detections over a certain length of time), etc.

Illustratively, the model accuracy may be positioning accuracy.

### (4) Change in model accuracy

Illustratively, the change in model accuracy may be a difference or gradient value between two consecutive model accuracies, or a difference or gradient value between the highest and lowest model accuracies per unit time. The present application imposes no limitations on other forms of the change in model accuracy.

Illustratively, the change in model accuracy may be the change in positioning accuracy.

It should be noted that the model accuracy and the change in model accuracy may have multiple definitions (i.e., determined in multiple ways), which is not limited in the present application.

### (5) Cosine similarity

The cosine similarity may be a cosine similarity between a model output and an output result (or other label value) of a traditional communication method for achieving the same function. Cosine similarity may be used to characterize model performance.

### (6) Change in cosine similarity

The change in cosine similarity may be a difference or gradient value between two consecutive cosine similarities, or a difference or gradient value between the highest and lowest cosine similarities per unit time. The present application imposes no limitation on other forms of the change in cosine similarity.

### (7) Measurement result of model input and/or model output

The measurement result of the model input may be considered as a measurement result or an analysis result of a model input. Illustratively, the measurement result of the model input may indicate a match or mismatch. For example, whether it is match or mismatch may be determined based on a statistical distribution of input data of the model and preset statistical distribution characteristic(s). For example, if the model input does not conform to the normal distribution, or if the mean and variance of the model input deviate from a preset mean and variance of the model input, or if a deviation exceeds a threshold, or if a dimension, type, data processing method, sampling length, etc. of the model input do not conform to pre-configured characteristic(s) of the model input, the measurement result of the model input may be determined as a mismatch. The measurement result of the model output is defined in a manner analogous to the measurement result of the model input, with the term "input" replaced by "output" throughout the description.

### (8) Output gain

Output gain is the output gain of the model.

### (9) Change in output gain

The change in output gain refers to the change in the output gain of a model. Illustratively, the change in output gain may be a difference or gradient value between two consecutive output gains, or a difference or gradient value between the highest and lowest output gains per unit time. The present application imposes no limitations on other forms of the change in output gain.

### (10) Reference signal overhead reduction

The reference signal overhead reduction may be used to evaluate the performance of AI models in AI-enabled beam management. The reference signal overhead reduction may be determined based on prediction result(s) of model(s).

The system performance indicator includes one or more of the following items:
(11) Throughput
(12) Delay
(13) Error rate
(14) Model accuracy
(15) Change in model accuracy

The following is a detailed description of each type of information that may be included as part of the system performance indicator.

### (11) Throughput

Throughput refers to the number of packets transmitted and/or received by a terminal device per unit time.

Illustratively, taking downlink data transmission as an example, throughput refers to the number of packets received or successfully received by a terminal device per unit time, or the number of packets transmitted or successfully transmitted by a network device or server per unit time. The measurement of the number of packets per unit time may occur at an application layer, a PDCP layer, an RLC layer, an MAC layer, a PHY layer, etc., which is not limited in the present application.

Illustratively, throughput here may be a specific lower limit value.

### (12) Delay

Delay refers to the length of time taken for one packet to be transmitted and acknowledged as received. Delay measurement may be end-to-end delay, which spans from the application layer of a transmitter to the application layer of a receiver, or air interface delay. For example, taking downlink as an example, delay may be the time taken for data to be transmitted from a PDCP layer of the network device until it is acknowledged as received by a PDCP layer of the terminal device. The present application imposes no limitations on a measurement location and a definition of the delay.

Illustratively, the delay may also be used to indicate a jitter value, that is, the change in delay. The jitter value may be a difference between the lowest delay and the highest delay per unit time, or a deviation of per-packet delay relative to the average delay, or other definitions of jitter, etc., which are not limited in the present application.

Illustratively, the delay here may be a specific upper limit value.

### (13) Error rate

The error rate may be, for example, packet loss rate, code error rate, bit error rate, block error rate, byte error rate, etc. The packet loss rate may be considered as the packet loss rate of a network (such as Ethernet or air interface), which refers to the ratio of lost packets to the total transmitted packets. The packet loss rate can reflect model performance. For instance, degraded model performance may lead to increased packet loss, thereby affecting user experience. The code error rate refers to the ratio of erroneously received codewords to the total transmitted codewords. The bit error rate refers to the ratio of erroneously received bits to the total transmitted bits. The block error rate refers to the ratio of erroneously received code blocks to the total transmitted code blocks. The byte error rate refers to the ratio of erroneously received bytes to the total transmitted bytes.

Illustratively, the error rate here may be a specific upper limit value.

### (14) Model accuracy

Illustratively, the model accuracy here may be a specific lower limit value. For other descriptions about the model accuracy, reference may be made to the above description, which will not be repeated here. It should be noted that when the model accuracy is included as part of the system performance indicator, it may also be referred to as "accuracy".

### (15) Change in model accuracy

Illustratively, the change in accuracy here may be a specific lower limit value. For other descriptions about the change in model accuracy, reference may be made to the above description, which will not be repeated here. It should be noted that when the change in model accuracy is included as part of the system performance indicator, it may also be referred to as "accuracy change".

It can be understood that the above upper limit or lower limit may also be a range. No limitation is imposed in this regard.

S202: update a candidate model based on the model update information.

The candidate model belongs to the N model(s).

Illustratively, the candidate model may be determined based on a model performance monitoring result and/or a model configuration monitoring result. The model performance monitoring result and/or a model configuration monitoring result is obtained by the terminal device monitoring the performance and/or the configuration of the model(s) deployed on the terminal device. For example, the terminal device may determine a model whose model performance monitoring result does not match the model performance indicator(s) as the candidate model, or the terminal device may also determine a model whose model configuration monitoring result does not match configuration parameter(s) applicable to the model as the candidate model, or the terminal device may also determine a model whose model performance monitoring result does not match the model performance indicator(s) and whose model configuration monitoring result does not match the configuration parameter(s) applicable to the model as the candidate model. The candidate model belongs to the N model(s) in the model information, that is, the candidate model is one or more of the N model(s).

Based on Case 1 of the model update information, in a specific implementation, S202 may include: the terminal device may update each model through the model update method(s) corresponding to the N model(s).

Taking the example in Table 1 as an example, model 0001 has a corresponding model update method, which is UE.1. That is, "the terminal device monitors a model, the terminal device independently completes the model update, and the terminal device does not notify the network device of the model update status", then the terminal device can complete the model update of model 0001 independently.

Based on Case 2 of the model update information, in a specific implementation, S202 may include determining a target model based on the model update information, and then updating the candidate model to the target model.

Illustratively, the terminal device may determine the target model based on the model update information and second model information corresponding to the candidate model, so that the terminal device may update the candidate model to the target model.

The second model information includes a second model list and/or second configuration information. The second configuration information includes configuration information of each model in the second model list. The second model list may include identifier(s) of candidate target model(s) of the candidate model, and the second model list includes configuration information of each model in the second model list. Each model in the second model list may correspond to the same configuration information. Alternatively, taking the above Table 4 as an example, each model in the second model list may respectively correspond to different configuration information. Alternatively, taking the above Table 5 as an example, a part of models in the second model list may correspond to the same configuration information, and other models may correspond to different configuration information.

Specifically, the terminal device may determine a model that meets a first condition and a second condition as the target model.

The first condition is that a model identifier of the target model is present in both the first model list and the second model list.

The second condition is that a monitoring result of the candidate model matches configuration information corresponding to the target model in the first configuration information, and/or a monitoring result of the candidate model matches configuration information corresponding to the target model in the second configuration information.

Optionally, in a case that the second condition is that the monitoring result of the candidate model matches the configuration information corresponding to the target model in the second configuration information, the monitoring result of the candidate model matching the configuration information corresponding to the target model in the second configuration information means that, if the monitoring result of the candidate model does not match the configuration information corresponding to the target model in the first configuration information, the monitoring result of the candidate model matches the configuration information corresponding to the target model in the second configuration information.

For the first condition, illustratively, the model identifier of the target model is 0005, the first model list is (0005, 0006, 0007), and the second model list is (0004, 0005, 0006, 0007), then the target model meets the first condition.

For the second condition, an example is taken where the monitoring result of the candidate model matches the configuration information corresponding to the target model in the first configuration information. Optionally, the matching of the monitoring result of the candidate model with the configuration information corresponding to the target model in the first configuration information may be determined by any one of the methods as follows.

Method 1: if the model performance monitoring result of the candidate model matches the model performance indicator(s) of the target model in the first configuration information, it can be considered that the monitoring result of the candidate model matches the configuration information corresponding to the target model in the first configuration information.

Method 2: if the model configuration monitoring result of the candidate model matches the configuration parameter(s) applicable to the target model in the first configuration information, it can be considered that the monitoring result of the candidate model matches the configuration information corresponding to the target model in the first configuration information.

Method 3: if the model performance monitoring result of the candidate model matches the model performance indicator(s) of the target model in the first configuration information, and the model configuration monitoring result of the candidate model matches the configuration parameter(s) applicable to the target model in the first configuration information, it can be considered that the monitoring result of the candidate model matches the configuration information corresponding to the target model in the first configuration information.

In the aforementioned Method 1, whether the model performance monitoring result of the candidate model matches the model performance indicator(s) of the target model may be divided into the following cases.

Case 1: if the model performance indicator(s) of the target model simply include intermediate indicator(s) or system performance indicator(s), and the intermediate indicator(s) or the system performance indicator(s) in the model performance monitoring result matches the intermediate indicator(s) or the system performance indicator(s) in the model performance indicator, the model performance monitoring result is considered to match the model performance indicator(s) of the target model.

Case 2: if the model performance indicator(s) of the target model include intermediate indicator(s) and system performance indicator(s), and the intermediate indicator(s) and the system performance indicator(s) in the model performance monitoring result match the intermediate indicator(s) and/or the system performance indicator(s) in the model performance indicator(s), the model performance monitoring result is considered to match the model performance indicator(s) of the target model.

Whether the intermediate indicator(s) in the model performance monitoring result matches the intermediate indicator(s) in the model performance indicator(s) of the target model may be determined in ways as follows.

Method A: if all intermediate indicators in the model performance monitoring result match all intermediate indicators in the model performance indicators of the target model, it is considered that the intermediate indicators in the model performance monitoring result match the intermediate indicators in the model performance indicators of the target model.

Method B: if intermediate indicator(s) in the model performance monitoring result matches a part of intermediate indicators in the model performance indicators of the target model, it is considered that the intermediate indicator(s) in the model performance monitoring result matches the intermediate indicator(s) in the model performance indicators of the target model. The part of indicators may be certain specific indicator(s), or a certain proportion of the intermediate indicators.

The same principle applies to the determination of whether the system performance indicator(s) in the model performance monitoring result matches the system performance indicator(s) in the model performance indicator(s) of the target model, and this will not be repeated here.

In the aforementioned Method 2, whether the model configuration monitoring result of the candidate model matches the configuration parameter(s) applicable to the target model may be divided into the following cases.

Case 3: if the configuration parameter applicable to the target model simply includes an model application scenario, a model valid region, or a model processing parameter, and the model application scenario in the model configuration monitoring result matches the application scenario applicable to the target model, or the region where a model is located in the model configuration monitoring result matches the valid region of the target model, or the model processing parameter in the model configuration monitoring result matches the processing parameter applicable to the target model, it is considered that the model configuration monitoring result matches the configuration parameter applicable to the target model.

Case 4: if the configuration parameter applicable to the target model includes multiple of the model application scenario, the model valid region, and the model processing parameter, the model configuration monitoring result is considered to match the configuration parameter applicable to the target model when one or more of the following conditions 1 to 3 are met. The conditions 1 to 3 are respectively defined as follows: the model application scenario in the model configuration monitoring result matches the application scenario applicable to the target model, the region where the model is located in the model configuration monitoring result matches the valid region applicable to the target model, and the model processing parameter in the model configuration monitoring result matches the processing parameter applicable to the target model.

Whether the model application scenario in the model configuration monitoring result matches the model application scenario in the configuration parameter applicable to the target model may be determined by several methods as follows.

Method C: if all parameters of the model application scenario in the model configuration monitoring result match those of the model application scenario in the configuration parameter applicable to the target model, then it is considered that the model application scenario in the model configuration monitoring result matches the model application scenario in the configuration parameter applicable to the target model.

Method D: if the model application scenario in the model configuration monitoring result matches partial parameter(s) of the model application scenario in the configuration parameter applicable to the target model, it is considered that the model application scenario in the model configuration monitoring result matches the model application scenario in the configuration parameter applicable to the target model. The partial parameter(s) may be certain specific parameter(s), or the number of the partial parameters reaches a preset ratio.

The same principle applies to the determination of whether the model valid region in the model configuration monitoring result matches the model valid region in the configuration parameter applicable to the target model, and the determination of whether the model processing parameter in the model configuration monitoring result matches the model processing parameter in the configuration parameter applicable to the target model, and this will not be repeated here.

More specifically, for a certain indicator or a certain configuration in the monitoring result, a determination of whether this indicator or this configuration in the performance configuration parameter matches the parameter or the configuration in the monitoring result may be performed through a method as follows.

For any one of the indicators including model accuracy, cosine similarity, output gain, reference signal overhead reduction, and throughput, when the indicator in the monitoring result is greater than or equal to the indicator in the parameter of the target model, the indicator in the monitoring result is considered to match the indicator in the parameter of the target model. For example, for the model accuracy, if the model accuracy in the parameter of the target model is 80%, when the model accuracy in the monitoring result is greater than or equal to 80%, it means that the model accuracy in the monitoring result matches the model accuracy in the parameter of the target model, otherwise, it means that the model accuracy in the monitoring result does not match the model accuracy in the parameter of the target model.

For any indicator of the indicators including the change in model accuracy, change in cosine similarity, and change in output gain, when the indicator determined based on the monitoring result is greater than or equal to the indicator in the parameter of the target model, it is considered that the indicator determined based on the monitoring result matches the indicator in the parameter of the target model. For example, for the change in model accuracy, if the change in the model accuracy in the parameter of the target model is 10%, when the change in the model accuracy calculated based on the model accuracy in the monitoring result is greater than or equal to 10%, it means that the change in the model accuracy obtained through calculation based on the model accuracy in the monitoring result matches the change in the model accuracy in the parameter of the target model, otherwise, it means that the change in the model accuracy obtained through calculation based on the model accuracy in the monitoring result does not match the change in the model accuracy in the parameter of the target model.

When calculating the change in the model accuracy based on the model accuracy in the monitoring result, the calculation may be performed based on the model accuracy in a previous monitoring result and the model accuracy in the current monitoring result. For example, the change in the model accuracy = the model accuracy in the current monitoring result - the model accuracy in the previous monitoring result. The similar principle applies to the calculation process of other variations in the monitoring result, and this will not be repeated here.

For the measurement result of the model input and/or the model output, when the indicator in the monitoring result is the same as the indicator in the parameter of the target model, it is considered that the indicator in the monitoring result matches the indicator in the parameter of the target model. For example, for the measurement result of the model input, if the measurement result of the model input in the parameter of the target model is matched, and the measurement result of the model input in the monitoring result is also matched, it is considered that the indicator in the monitoring result matches the indicator in the parameter of the target model, otherwise, it is considered that the indicator in the monitoring result does not match the indicator in the parameter of the target model.

For any indicator of delay and error rate, when the indicator in the monitoring result is less than or equal to the indicator in the parameter of the target model, it is considered that the indicator in the monitoring result matches the indicator in the parameter of the target model. For example, with respect to delay, if the delay in the parameter of the target model is 20 ms, when the delay in the monitoring result is 16 ms, it means that the delay in the monitoring result matches the delay in the parameter of the target model, otherwise, it means that the delay in the monitoring result does not match the delay in the parameter of the target model.

For any configuration of urbanization, non-urbanization, high-speed movement, medium-speed movement, low-speed movement, uniform movement, stationary, base station height, terminal device height, and preset inter-site distance in the application scenario, when a certain type of scenario in the monitoring result is the same as the type of scenario in the parameter of the target model, it is considered that the configuration in the monitoring result matches the configuration in the parameter of the target model. A type of scenario refers to scenarios obtained based on the same classification criterion. For example, urbanization and non-urbanization constitute one type of scenario, with the classification criterion being the presence of urbanization. High-speed movement, medium-speed movement, low-speed movement, uniform-speed movement, and stationary belong to the same type of scenario, with the classification criterion being the moving speed of the terminal device. The base station height, terminal device height, and preset inter-site distance may constitute different types of scenarios or the same type of scenario (in the latter case, the classification criterion may be device height or inter-device distance). Illustratively, for a scenario whose classification criterion is the moving speed of the terminal device, if the moving scenario of the terminal device in the monitoring result is high-speed movement, and the application scenario in the parameter of the target model includes high-speed movement, it means that the scenario of this type in the monitoring result, whose classification criterion is the moving speed of the terminal device, matches the application scenario in the parameter of the target model; otherwise, it means that the scenario of this type in the monitoring result, whose classification criterion is the moving speed of the terminal device, does not match the application scenario in the parameter of the target model.

For any configuration of the moving speed of the terminal device and the terminal device distribution in the application scenario, when the configuration in the monitoring result meets the configuration in the parameter of the target model, it is considered that the configuration in the monitoring result matches the configuration in the parameter of the target model. For example, for the moving speed of the terminal device, if the moving speed of the terminal device in the monitoring result belongs to the moving speed of the terminal device in the parameter of the target model (assuming that the speed is a range), it means that the configuration in the monitoring result matches the configuration in the parameter of the target model, otherwise, it means that the configuration in the monitoring result does not match the configuration in the parameter of the target model.

For any configuration of frequency, RA, TA, cell, and beam in the model valid region, when the position of the terminal device in the monitoring result is within a region indicated by the valid region in the parameter of the target model, it is considered that the position of the terminal device in the monitoring result matches the valid region in the parameter of the target model. For example, if the position of the terminal device in the monitoring result is within a cell in the parameter of the target model, it means that the position of the terminal device in the monitoring result matches the valid region in the parameter of the target model, otherwise, the position of the terminal device in the monitoring result does not match the valid region in the parameter of the target model.

For any configuration of the model input data processing method and the model output data processing method in the model processing parameter, when the configuration in the monitoring result belongs to the configuration in the parameter of the target model, it is considered that the configuration in the monitoring result matches the configuration in the parameter of the target model. For example, for the model input data processing method, if the model input data processing method adopted by the terminal device in the monitoring result is one or more of the model input data processing methods in the parameter of the target model, it means that the configuration in the monitoring result matches the configuration in the parameter of the target model, otherwise, the configuration in the monitoring result does not match the configuration in the parameter of the target model.

For one or more of the data precision, model complexity, other configuration(s), and model architecture in the processing parameter of the model, when the configuration in the monitoring result meets the configuration in the parameter of the target model, the configuration in the monitoring result is considered to match the configuration in the parameter of the target model. For example, with respect to data precision, if the data precision in the monitoring result meets the data precision in the parameter of the target model, it means that the configuration in the monitoring result matches the configuration in the parameter of the target model, otherwise, the configuration in the monitoring result does not match the configuration in the parameter of the target model.

For another example, with respect to the required computing power in the model complexity, if available computing power for the terminal device in the monitoring result meets the computing power required by the target model, it means that the configuration in the monitoring result matches the configuration in the parameter of the target model, otherwise, the configuration in the monitoring result does not match the configuration in the parameter of the target model. The available computing power for the terminal device in the monitoring result meeting the computing power required by the target model specifically includes: if the computing power available to the terminal device is higher than the computing power required by the target model, then it is determined that the computing power available to the terminal device matches the computing power required by the target model.

The similar principle applies to the matching between the available power for the terminal device and the power consumption required by the target model-simply replace the "computing power" of the terminal device with "power" and replace the "computing power" of the target model with "power consumption" for understanding.

For the same indicator or configuration, the indicator or configuration in the monitoring result and the indicator or configuration in the parameter of the target model may be determined by the same method or by different methods, which is not limited in the present application.

Optionally, the terminal device may determine the target model based on Method 1 or Method 2 as follows.

### Method 1

In Method 1, there may be a plurality of models that meet the first condition and the second condition, then the target model may be any one of the models that meet the first condition and the second condition, or the target model may be a model with the highest priority among the models that meet the first condition and the second condition.

The priorities of the models that meet the first condition and the second condition may be determined based on an arrangement order of the model identifiers in the first model list. Taking the second model list (0004, 0005, 0006, 0007) as an example, the model corresponding to the model identifier 0004 is the model with the highest priority.

The priorities of the models that meet the first condition and the second condition may also be determined based on pre-configured priorities in the first model list of the terminal device. The priorities of the models that meet the first condition and the second condition may also be determined by other methods, which is not limited in the present application.

### Method 2

In Method 2, the terminal device may determine the target model based on a response message to a model update request.

Specifically, the terminal device may transmit the model update request, the network device may receive the model update request and transmit the response message to the model update request, and then the terminal device may receive the response message to the model update request.

Optionally, the model update request may include a second model list and/or second configuration information, to enable the network device to notify the terminal device of the target model through the response message to the model update request based on the second model list and/or the second configuration information.

Optionally, the terminal device may transmit the model update request in a case that a first model is absent from both the first model list and the second model list. The first model refers to a model that meets both a third condition and a fourth condition. The third condition is that a model identifier of the first model is present in both the first model list and the second model list, and the fourth condition is that a monitoring result of the candidate model matches configuration information of the first model in the first configuration information, or a monitoring result of the candidate model matches configuration information of the first model in the second configuration information. Then, the target model is carried in the response message to the model update request, and the terminal device may determine the target model based on the response message.

Accordingly, the response message to the model update request may include indication information. The indication information is used to indicate one or more of the following information:
"the target model";
"the target model is any model in the second model list";
"the target model is a model with the highest priority in the second model list".

The indication information of "the target model" may be the identifier of the target model, or it may be the identifier of the target model and the configuration information of the target model. Alternatively, the indication information of the target model may also be a model (a new model identifier, or a new model identifier and configuration information of the model) re-indicated by the network device relative to the first model list and the second model list.

The statement "the target model is any model in the second model list" is used to indicate that the terminal device may determine any model from the second model list as the target model. In this case, the terminal device may determine any model in the second model list as the target model

The statement "the target model is a model with the highest priority in the second model list" is used to indicate that the terminal device may determine the model with the highest priority as the target model based on the priority of the model(s) in the second model list. In this case, the terminal device may determine, based on priorities of models in the second model list, the model with the highest priority among the models as the target model.

After determining the target model, the terminal device may update the candidate model to the target model.

In a possible implementation, the terminal device may acquire a first time duration, which may be a minimum duration required between execution of a model update and execution of a successive model update. In other words, after performing a model update, the terminal device waits for the first time duration before executing another update, which helps prevent frequent model updates by the terminal device.

Optionally, the first duration may be carried in the model update information or the response message to the model update request.

It should be noted that before updating the candidate model, the terminal device needs to consider whether the computing power available to the terminal device is sufficient to execute the target model. That is, the terminal device performs a matching between the computing power available to the terminal device and the computing power required by the target model. When the computing power available to the terminal device matches the computing power required by the target model, it is considered that the computing power available to the terminal device is sufficient to execute the target model; when the computing power available to the terminal device does not match the computing power required by the target model, it is considered that the computing power available to the terminal device is insufficient to execute the target model.

Illustratively, when the computing power available to the terminal device is higher than the computing power required by the target model, it is determined that the computing power available to the terminal device matches the computing power required by the target model. It can be considered that the computing power available to the terminal device is sufficient to execute the target model, and the terminal device may update the candidate model to the target model.

When the computing power available to the terminal device is lower than the computing power or power consumption of the target model, it is determined that the computing power available to the terminal device does not match the computing power of the target model. It can be considered that the computing power available to the terminal device is insufficient to execute the target model. The terminal device may determine another model whose required computing power is lower than the computing power available to the terminal device, and then update the candidate model to that model. Alternatively, the terminal device may not update the candidate model.

The similar principle applies to the matching between the power available to the terminal device and the power consumption required by the target model-simply replace the "computing power" of the terminal device with "power" and replace the "computing power" of the target model with "power consumption" for understanding.

It can be understood that before the terminal device performs model update, when the terminal device performs a matching between the monitoring result of the candidate model and the configuration information corresponding to the target model, it may perform a matching between the computing power available to the terminal device and the computing power required by the target model, and/or it may perform a matching between the power available to the terminal device and the power consumption required by the target model. In this matching process, the terminal device may disregard whether the computing power available to the terminal device is sufficient to execute the target model.

Alternatively, before updating the candidate model, the terminal device considers whether the computing power available to the terminal device is sufficient to execute the target model. When the terminal device performs a matching between the monitoring result of the candidate model and the configuration information corresponding to the target model, it is not necessary to match the computing power available to the terminal device with the computing power required by the target model, and/or match the power available to the terminal device with the power consumption required by the target model.

It should be noted that before the model update is completed, when it is determined that the computing power or power of the terminal device does not meet the computing power or power required by the target model, the terminal device may cancel the model update, or the terminal device may determine further available model(s), or the terminal device may wait for a period of time to determine whether the computing power or power of the terminal device meets the computing power or power required by the target model, and if the computing power or power of the terminal device does not meet the computing power or power required by the target model, it updates the candidate model to a further available model, or cancel the model update.

In this embodiment, the terminal device may acquire model information and/or model update information. The model information includes information of N model(s), and the model update information includes update information corresponding to the N model(s). Then the terminal device updates candidate model(s) based on the model update information. The candidate model(s) belongs to the N model(s). The present application provides a solution for model updating, thereby ensuring model performance and thus enabling the provision of normal services to users.

Optionally, in a possible implementation, the terminal device may not update the candidate model based on the model update information. In this case, after determining the candidate model, the terminal device may determine whether there is a tagged model (tagged as a private model or a public model) in a second model list. In other words, the terminal device may determine whether there is a model tagged as a private model or a public model in the second model list, in order to determine the update method for the candidate model.

Illustratively, when there is a tagged model in the second model list and the model is a private model, the terminal device can complete the model update autonomously.

When there is a tagged model in the second model list and the model is a public model, the terminal device may transmit a model update request to the network device, requesting the network device to assist it in the model updating.

In a possible implementation, the model information and/or the model update information acquired by the terminal device may be transmitted by the network device. The interaction between the terminal device and the network device is described below through Embodiment 2.

FIG. 3 is a schematic flowchart of another model update method provided in Embodiment 2 of the present application. Referring to FIG. 3, the method includes steps as follows.

S301, a network device may transmit model information and/or model update information, and correspondingly, a terminal device may receive the model information and/or the model update information.

S302, the terminal device updates a candidate model based on the model update information, where the candidate model belongs to N model(s).

For the related description of the model information, the model update information, and the terminal device updating the candidate model based on the model update information, please refer to Embodiment 1, which will not be repeated here.

In this embodiment, the network device may transmit the model information and/or the model update information, and the terminal device may receive the model information and/or the model update information. The model information includes information of N model(s), and the model update information includes update information corresponding to the N model(s). Then the terminal device updates the candidate model based on the model update information. The candidate model belongs to N model(s). The present application provides a solution for model updating, thereby ensuring model performance and thus enabling the provision of normal services to users.

Next, another model update method provided by the present application is described in detail through Embodiment 3.

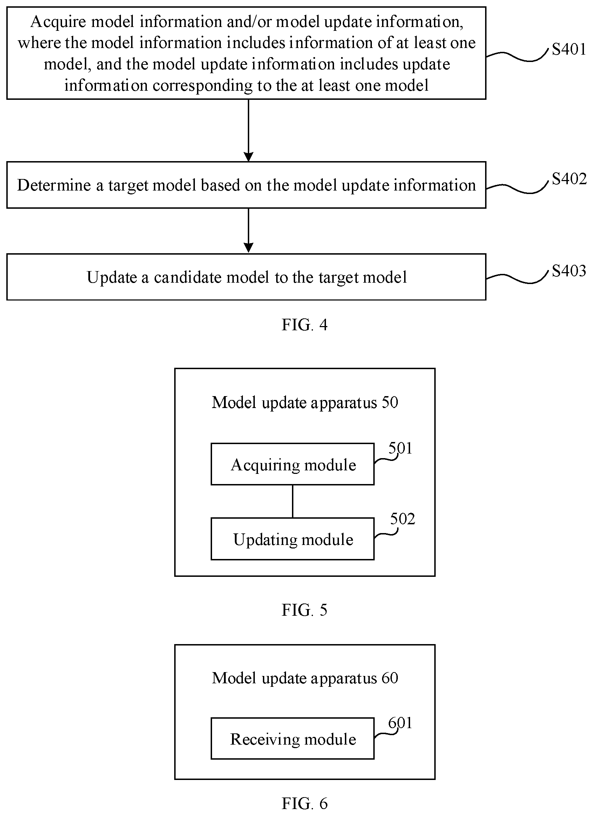

FIG. 4 is a schematic flowchart of another model update method provided in Embodiment 3 of the present application. The method may be executed by a terminal device or by a model update apparatus provided in a terminal device. The apparatus may be a chip, a chip module, or an integrated development environment (integrated development environment, IDE). Referring to FIG. 4, the method includes the following steps.

S401, acquire model information and/or model update information, where the model information includes information of N model(s), and the model update information includes update information corresponding to the N model(s).

S402, determine a target model based on the model update information.

S403, update a candidate model to the target model.

For the related description of the model information, the model update information, and how the terminal device determines the target model, please refer to the foregoing embodiments, which will not be repeated here.

In this embodiment, the terminal device may acquire the model information and/or the model update information. The model information includes the information of N model(s), and the model update information includes the update information corresponding to the N model(s), so that the terminal device may determine the target model based on the model update information and update the candidate model to the target model. The present application provides a solution for model updating, thereby ensuring model performance and thus enabling the provision of normal services to users.

FIG. 5 is a schematic structural diagram of a model update apparatus provided in Embodiment 4 of the present application. Referring to FIG. 5, the apparatus 50 includes: an acquiring module 501 and an updating module 502.

The acquiring module 501 is configured to acquire model information and/or model update information, where the model information includes information of at least one model, and the model update information includes update information corresponding to the at least one model.

The updating module 502 is configured to update a candidate model based on the model update information, where the candidate model belongs to the at least one model.

In a possible implementation, the model update information includes a model update method corresponding to the at least one model.

In a possible implementation, the updating module 502 is specifically configured to:
determine a target model based on the model update information;
update the candidate model to the target model.

In a possible implementation, the model update information includes a first model list and/or first configuration information corresponding to the at least one model;
where the target model is determined based on the model update information and/or second model information corresponding to the candidate model; or,
the target model is determined based on a response message to a model update request;
where the second model information includes a second model list and/or second configuration information;
the first configuration information includes configuration information of each model in the first model list;
the second configuration information includes configuration information of each model in the second model list.

In a possible implementation, the target model meets a first condition and a second condition. The first condition is that a model identifier of the target model is present in both the first model list and the second model list, and the second condition is that a monitoring result of the candidate model matches configuration information corresponding to the target model in the first configuration information, or a monitoring result of the candidate model matches configuration information corresponding to the target model in the second configuration information.

In a possible implementation, the target model is a model with a highest priority among models that meet the first condition and the second condition.

In a possible implementation, a first model is absent from both the first model list and the second model list, and the target model is carried in the response message to the model update request;
the first model is a model that meets both a third condition and a fourth condition;
the third condition is that a model identifier of the first model is present in both the first model list and the second model list, and the fourth condition is that a monitoring result of the candidate model matches configuration information of the first model in the first configuration information, or a monitoring result of the candidate model matches configuration information of the first model in the second configuration information.

In a possible implementation, the target model is carried in the response message to the model update request, and the apparatus further includes a transceiving module;
where the transceiving module is specifically configured to:
transmit the model update request;
receive the response message to the model update request.

In a possible implementation, the target model is determined based on indication information in the response message to the model update request;
where the indication information is used to indicate one or more items of following information:
the target model;
the target model being any model in the second model list;
the target model being a model with a highest priority in the second model list.

In a possible implementation, the model update request includes the second model list and/or the second configuration information.

In a possible implementation, the information of the model includes one or more items of following:
information used to indicate a model;
information used to indicate a use case;
information used to indicate a function.

In a possible implementation, the acquiring module 501 is specifically configured to:
acquire a first duration, where the first duration is a minimum duration required between execution of a model update and execution of a successive model update.

The apparatus in this embodiment may be configured to execute the steps of the model update method in the method embodiments mentioned above. The specific implementation and technical effect are similar and will not be repeated here.

FIG. 6 is a schematic structural diagram of a model update apparatus provided in Embodiment 5 of the present application. Referring to FIG 6, the apparatus 60 includes a receiving module 601.

The receiving module 601 is configured to receive model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model; the first configuration information includes configuration information of each model in the first model list; and the model update information is used to determine a target model of the candidate model.

In a possible implementation, the target model of the candidate model is carried in a response message to a model update request, and the apparatus further includes a transceiving module;
where the transceiving module is specifically configured to:
transmit the model update request;
receive the response message to the model update request.

In a possible implementation, the target model is determined based on indication information in the response message to the model update request;
where the indication information is used to indicate one or more items of following information:
the target model;
the target model being any model in the second model list;
the target model being a model with a highest priority in the second model list.

In a possible implementation, the information of the model includes one or more items of following:
information used to indicate a model;
information used to indicate a use case;
information used to indicate a function.

In a possible implementation, the apparatus further includes an acquiring module;
where the acquiring module is specifically configured to:
acquire a first duration, where the first duration is a minimum duration required between execution of a model update and execution of a successive model update.

The apparatus in this embodiment may be configured to execute the steps of the model update method in the method embodiments mentioned above. The specific implementation and technical effect are similar and will not be repeated here.

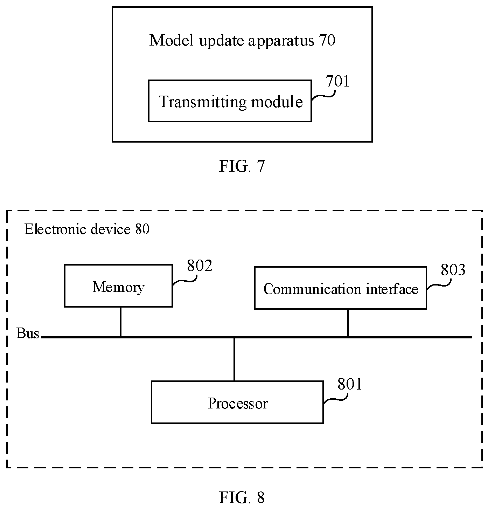

FIG. 7 is a schematic structural diagram of a model update apparatus provided in Embodiment 6 of the present application. Referring to FIG. 7, the apparatus 70 includes a transmitting module 701.

The transmitting module 701 is configured to transmit model information and/or model update information, where the model information includes information of at least one model; the model update information includes update information corresponding to the at least one model, and the model update information is used for update of a candidate model in the at least one model.

In a possible implementation, the model update information includes a model update method corresponding to the at least one model.

In a possible implementation, the model update information includes a first model list and/or first configuration information corresponding to the at least one model, the first configuration information includes configuration information of each model in the first model list; and the model update information is used to determine a target model of the candidate model.

In a possible implementation, the apparatus further includes a transceiving module;
where the transceiving module is specifically configured to:
receive a model update request;
transmit a response message to the model update request, where the response message to the model update request carries a target model of the candidate model.

In a possible implementation, the response message to the model update request includes indication information;
where the indication information is used to indicate one or more items of following information:
the target model;
the target model being any model in a second model list;
the target model being a model with a highest priority in the second model list.

In a possible implementation, the information of the model includes one or more items of following:
information used to indicate a model;
information used to indicate a use case;
information used to indicate a function.

In a possible implementation, the transmitting module 701 is specifically configured to:
transmit a first duration, where the first duration is a minimum duration required between execution of a model update and execution of a successive model update.

The apparatus in this embodiment may be configured to execute the steps of the model update method in the method embodiments mentioned above. The specific implementation and technical effect are similar and will not be repeated here.

FIG. 8 is a schematic structural diagram of an electronic device provided in Embodiment 7 of the present application. As shown in FIG. 8, the electronic device 80 may include at least one processor 801 and a memory 802.

The memory 802 is configured to store a program. Specifically, the program may include program codes, and the program codes include computer operable instructions.

The memory 802 may include a random access memory (Random Access Memory, RAM), and may further include a non-volatile memory (Non-volatile Memory) such as at least one disk memory.

The processor 801 is configured to execute computer-executable instructions stored in the memory 802 to implement the method described in the foregoing method embodiments. The processor 801 may be a central processing unit (Central Processing Unit, CPU), or an application specific integrated circuit (Application Specific Integrated Circuit, ASIC), or one or more integrated circuits configured to implement the embodiments of the present application.

Optionally, the electronic device 80 may further include: a communication interface 803. In a specific implementation, if the communication interface 803, the memory 802, and the processor 801 are implemented separately, the communication interface 803, the memory 802, and the processor 801 may be connected to each other through a bus and communicate with each other. The bus may be an industry standard architecture (Industry Standard Architecture, ISA) bus, a peripheral component interconnect (Peripheral Component, PCI) bus, or an extended industry standard architecture (Extended Industry Standard Architecture, EISA) bus, etc. The bus may be divided into an address bus, a data bus, a control bus, etc., but this does not imply that there is only one bus or one type of bus.

Optionally, in a specific implementation, if the communication interface 803, the memory 802, and the processor 801 are integrated on a single chip, the communication interface 803, the memory 802, and the processor 801 may communicate through internal interface(s).

The electronic device 80 may be a chip, a chip module, an integrated development environment (Integrated Development Environment, IDE), a terminal device, a network device, etc.

The electronic device of this embodiment may be configured to execute the solutions of the foregoing method embodiments. The specific implementation and technical effect are similar and will not be repeated here.

Embodiment 8 of the present application provides a computer-readable storage medium, which may include: a USB flash drive, a mobile hard disk, a read-only memory (Read-Only Memory, ROM), a RAM, a disk or an optical disk, and other media that can store computer-executable instructions. Specifically, the computer-readable storage medium stores therein computer-executable instructions which, when executed by a computer, cause the technical solution illustrated in the foregoing method embodiments to be executed. The specific implementation method and technical effect are similar and will not be repeated here.

Embodiment 9 of the present application provides a computer program product, including a computer program which, when executed by a computer, causes the technical solution illustrated in the foregoing method embodiments to be executed. The specific implementation method and technical effect are similar and will not be repeated here.

Embodiment 10 of the present application provides a chip storing thereon a computer program which, when executed by the chip, causes the technical solution illustrated in the foregoing method embodiments to be executed.

In a possible implementation, the chip may also be a chip module.

Other embodiments of the present application will be apparent to those skilled in the art from consideration of the specification and practice of the invention disclosed herein. The present application is intended to cover any modifications, uses or adaptive changes of the present application, which follow the general principles of the present application and include well-known common knowledge or conventional technical means in the technical field that are not disclosed in the present application. The specification and embodiments are to be regarded as exemplary only, with the true scope and spirit of the present application being indicated by the claims below.

It should be understood that the present application is not limited to the precise construction described above and shown in the drawings, and various modifications and alterations may be made without departing from the scope of the present application. The scope of the present application is limited only by the appended claims.

In the present application, the term "and/or" is only an association relationship describing the associated objects, which means that there may be three kinds of relationships, for example, A and/or B may mean: there are three cases where A exists alone, both A and B exist, and B exists alone. In addition, the character "/" used herein indicates that the associated objects before and after are in an "or" relationship.

The expression "at least one (item) of the following" or similar phrasing refers to any combination of the listed items, including any single item or any combination of multiple items. For example, "at least one (item) of a, b or c" may represent: a, b, c, a and b, a and c, b and c, or a, b, and c, where each of a, b, and c may be either a single element or a set including one or more elements.

In the present application, the term "at least one" refers to one or more, and "a plurality of" means two or more. In the embodiments of the present application, the descriptions such as "first", "second", etc., are used solely for illustrative purposes and to distinguish between described objects, without implying any order or indicating any specific limitation on the quantity of devices in the embodiments. These descriptions shall not be construed as imposing any restrictions on the embodiments of the present application. For example, the first threshold and the second threshold are merely used to distinguish between different thresholds, and do not indicate any difference in magnitude, priority, or importance between these two thresholds.

In the present application, expressions such as "illustratively," "in some embodiments," "in other embodiments," etc. are used to indicate examples, illustrations, or explanations. Any embodiment or design solution described as "illustrative" in the present application shall not be construed as being more preferred or advantageous over other embodiments or design solutions. Rather, the use of the term "illustrative" is intended to present concepts in a concrete manner.

In the present application, the terms "of", "respective (corresponding, relevant)", "corresponding (corresponding)" and "associated" may sometimes be used interchangeably. It should be noted that when their distinctions are not emphasized, these terms are intended to convey consistent meanings. In the embodiments of the present application, the terms "communication" and "transmission" may sometimes be used interchangeably. It should be noted that when their distinctions are not emphasized, these terms are intended to convey consistent meanings. For example, "transmission" may include transmitting and/or receiving, which can function as either a noun or a verb.

In the present application, the term "equal to" may be used in combination with either "less than" or "greater than", but not simultaneously with both. When "equal to" is combined with "less than", it applies to the technical solution employing "less than". When "equal to" is combined with "greater than", it applies to the technical solution employing "greater than".

## Claims

1. A model update method, comprising:
acquiring model information and/or model update information, wherein the model information comprises information of at least one model, and the model update information comprises update information corresponding to the at least one model;
updating a candidate model based on the model update information, wherein the candidate model belongs to the at least one model.

2. The method according to claim 1, wherein the model update information comprises a model update method corresponding to the at least one model.

3. The method according to claim 1, wherein the updating the candidate model based on the model update information comprises:
determining a target model based on the model update information;
updating the candidate model to the target model.

4. The method according to claim 3, wherein the model update information comprises a first model list and/or first configuration information corresponding to the at least one model;
wherein the target model is determined based on the model update information and/or second model information corresponding to the candidate model; or,
the target model is determined based on a response message to a model update request; wherein the second model information comprises a second model list and/or second configuration information;
the first configuration information comprises configuration information of each model in the first model list;
the second configuration information comprises configuration information of each model in the second model list.

5. The method according to claim 4, wherein
the target model meets a first condition and a second condition; wherein the first condition is that a model identifier of the target model is present in both the first model list and the second model list, and the second condition is that a monitoring result of the candidate model matches configuration information corresponding to the target model in the first configuration information, or a monitoring result of the candidate model matches configuration information corresponding to the target model in the second configuration information.

6. The method according to claim 5, wherein the target model is a model with a highest priority among models that meet the first condition and the second condition.

7. The method according to any one of claims 4 to 6, wherein a first model is absent from both the first model list and the second model list, and the target model is carried in the response message to the model update request;
the first model is a model that meets both a third condition and a fourth condition;
the third condition is that a model identifier of the first model is present in both the first model list and the second model list, and the fourth condition is that a monitoring result of the candidate model matches configuration information of the first model in the first configuration information, or a monitoring result of the candidate model matches configuration information of the first model in the second configuration information.

8. The method according to any one of claims 4 to 7, wherein the target model is carried in the response message to the model update request, and the method further comprises:
transmitting the model update request;
receiving the response message to the model update request.

9. The method according to claim 8, wherein the target model is determined based on indication information in the response message to the model update request; and
the indication information is used to indicate one or more items of following information:
the target model;
the target model being any model in the second model list;
the target model being a model with a highest priority in the second model list.

10. The method according to claim 8 or 9, wherein the model update request comprises the second model list and/or the second configuration information.

11. The method according to any one of claims 1 to 10, wherein the information of the model comprises one or more items of following:
information used to indicate a model;
information used to indicate a use case;
information used to indicate a function.

12. The method according to any one of claims 1 to 11, further comprising:
acquiring a first duration, wherein the first duration is a minimum duration required between execution of a model update and execution of a successive model update.

13. A model update method, comprising:
receiving model information and/or model update information, wherein the model information comprises information of at least one model; the model update information comprises update information corresponding to the at least one model, and the model update information is used for update of a candidate model in the at least one model.

14. The method according to claim 13, wherein the model update information comprises a model update method corresponding to the at least one model.

15. The method according to claim 13, wherein the model update information comprises a first model list and/or first configuration information corresponding to the at least one model; the first configuration information comprises configuration information of each model in the first model list; and the model update information is used to determine a target model of the candidate model.

16. The method according to claim 13 or 15, wherein the target model of the candidate model is carried in a response message to a model update request, and the method further comprises:
transmitting the model update request;
receiving the response message to the model update request.

17. The method according to claim 16, wherein the target model is determined based on indication information in the response message to the model update request;
the indication information is used to indicate one or more items of following information:
the target model;
the target model being any model in a second model list;
the target model being a model with a highest priority in the second model list.

18. The method according to any one of claims 13 to 17, wherein the information of the model comprises one or more items of following:
information used to indicate a model;
information used to indicate a use case;
information used to indicate a function.

19. The method according to any one of claims 13 to 18, further comprising:
acquiring a first duration, wherein the first duration is a minimum duration required between execution of a model update and execution of a successive model update.

20. A model update method, comprising:
transmitting model information and/or model update information, wherein the model information comprises information of at least one model; the model update information comprises update information corresponding to the at least one model, and the model update information is used for update of a candidate model in the at least one model.

21. The method according to claim 20, wherein the model update information comprises a model update method corresponding to the at least one model.

22. The method according to claim 20, wherein the model update information comprises a first model list and/or first configuration information corresponding to the at least one model; the first configuration information comprises configuration information of each model in the first model list; and the model update information is used to determine a target model of the candidate model.

23. The method according to claim 20 or 22, further comprising:
receiving a model update request;
transmitting a response message to the model update request, wherein the response message to the model update request carries a target model of the candidate model.

24. The method according to claim 23, wherein the response message to the model update request comprises indication information;
the indication information is used to indicate one or more items of following information:
the target model;
the target model being any model in a second model list;
the target model being a model with a highest priority in the second model list.

25. The method according to any one of claims 20 to 24, wherein the information of the model comprises one or more items of following:
information used to indicate a model;
information used to indicate a use case;
information used to indicate a function.

26. The method according to any one of claims 20 to 25, further comprising:
transmitting a first duration, wherein the first duration is a minimum duration required between execution of a model update and execution of a successive model update.

27. A model update apparatus, comprising:
an acquiring module, configured to acquire model information and/or model update information, wherein the model information comprises information of at least one model, and the model update information comprises update information corresponding to the at least one model;
an updating module, configured to update a candidate model based on the model update information, wherein the candidate model belongs to the at least one model.

28. A model update apparatus, comprising:
a receiving module, configured to receive model information and/or model update information, wherein the model information comprises information of at least one model; the model update information comprises update information corresponding to the at least one model, and the model update information is used for update of a candidate model in the at least one model.

29. A model update apparatus, comprising:
a transmitting module, configured to transmit model information and/or model update information, wherein the model information comprises information of at least one model; the model update information comprises update information corresponding to the at least one model, and the model update information is used for update of a candidate model in the at least one model.

30. An electronic device, comprising: a processor, and a memory communicatively connected to the processor; wherein,
the memory stores computer-executable instructions;
the processor executes the computer-executable instructions stored in the memory to implement the model update method according to any one of claims 1 to 19.

31. An electronic device, comprising: a processor, and a memory communicatively connected to the processor; wherein,
the memory stores computer-executable instructions;
the processor executes the computer-executable instructions stored in the memory to implement the model update method according to any one of claims 20 to 26.

32. A computer-readable storage medium, wherein the computer-readable storage medium stores computer-executable instructions which, when run by a computer, cause the model update method according to any one of claims 1 to 26 to be performed.
